# FASCICULE DE BREVET EUROPEEN

(11) **EP 3 934 109 B1**
(45) Date de publication et mention de la délivrance du brevet: **26.07.2023**
(21) Numéro de dépôt: 21181339.9
(22) Date de dépôt: 24.06.2021
(51) Int. Cl.: H04B 3/54

(54) **PROCÉDÉ ET DISPOSITIF DE TRANSMISSION D'UN MESSAGE**
VERFAHREN UND VORRICHTUNG ZUR ÜBERTRAGUNG EINER NACHRICHT
METHOD AND DEVICE FOR TRANSMITTING A MESSAGE

(30) Priorité: 01.07.2020 FR 2006934
(43) Date de publication de la demande: 05.01.2022
(73) Titulaire: Sagemcom Energy & Telecom SAS, 92500 Rueil-Malmaison (FR)
(72) Inventeur: BAROIS, Jérôme, 92500 RUEIL MALMAISON (FR); TERRIEN, Clément, 92500 RUEIL MALMAISON (FR)
(74) Mandataire: Cabinet Le Guen Maillet

(56) Documents cités:
- EP-A1- 3 104 569
- US-A1- 2012 134 395
- US-A1- 2013 182 719

## Description

### DOMAINE TECHNIQUE

Au moins un mode de réalisation concerne un procédé de transmission d'un message à partir d'un premier dispositif noeud vers un second dispositif noeud appartenant à un voisinage réseau du premier dispositif noeud, lesdits premier et second dispositifs noeuds appartenant à un réseau d'alimentation électrique utilisant des communications par courants porteurs en ligne. Au moins un mode de réalisation concerne un dispositif mettant en oeuvre le procédé.

### ETAT DE LA TECHNIQUE ANTERIEURE

Les communications par courants porteurs en ligne PLC (sigle signifiant « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée pas un dispositif noeud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs noeuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais). La norme G3-PLC est destinée à être exploitée dans des bandes fréquentielles allant de 10 à 490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment.

Toutefois, la norme G3-PLC ne permet l'utilisation que d'une seule desdites bandes fréquentielles pour un dispositif noeud donné. Plus exactement, les dispositifs noeuds récents peuvent parfois supporter plusieurs bandes fréquentielles, mais pas en même temps. Une reconfiguration est alors nécessaire pour passer d'une première bande fréquentielle à une seconde bande fréquentielle. Ainsi, lorsque dans un réseau de communication il est nécessaire de reconfigurer, dans une nouvelle bande fréquentielle, un ensemble de dispositifs concentrateurs de données et un ensemble de compteurs électriques qui lui sont associés, une reconfiguration peut se montrer particulièrement complexe. Par exemple, un dispositif compteur n'ayant pas pu réceptionner un message lui indiquant de changer de bande fréquentielle peut devenir incapable de communiquer avec le dispositif concentrateur de données auquel il est associé, après que ce dernier ait pu, quant à lui, changer de bande fréquentielle.

Or, les besoins en termes de ressources des réseaux de communication, notamment dans le déploiement des réseaux d'alimentation électrique de type AMM, grandissent de jour en jour. La bande fréquentielle pour laquelle les éléments constitutifs d'un réseau ont été certifiés peut se retrouver en limite de capacité, ce qui ne permet pas d'augmenter le nombre d'échanges dans le réseau, par exemple pour introduire de nouvelles fonctionnalités, de nouveaux besoins applicatifs, etc. <2a>

Il est souhaitable de pallier ces différents inconvénients de l'état de la technique. Il est notamment souhaitable de proposer un procédé de communication par courant porteur en ligne permettant d'augmenter la capacité de nombre d'échanges dans le réseau qui soit simple à mettre en oeuvre. Il est notamment souhaitable de proposer une solution applicable aux réseaux d'alimentation électrique de type AMM.

### EXPOSE DE L'INVENTION

Un procédé de transmission d'un message à partir d'un premier dispositif noeud vers un second dispositif noeud appartenant à un voisinage réseau dudit premier dispositif noeud est décrit. Les premier et second dispositifs noeuds appartiennent à un réseau d'alimentation électrique utilisant des communications par courants porteurs en ligne. Le procédé comprend les étapes suivantes mise en oeuvre par le premier dispositif noeud : - fragmenter ledit message en au moins un premier fragment et un second fragment ;
Le document EP 3 104 569 décrit un procédé de sélection d'un filtre à appliquer en réception d'une trame en fonction du schéma de modulation utilisé pour transmettre ladite trame.

Le document US 2012/0134395 et le document US 2013/0182719 décrivent des procédés de communication par courants porteurs en ligne qui utilisent une pluralité de sous-bandes fréquentielles pour transmettre des paquets de données.
- associer, audit premier fragment, une première bande fréquentielle d'un ensemble de bandes fréquentielles comprenant au moins deux bandes fréquentielles et associer, audit second fragment, une seconde bande fréquentielle dudit ensemble de bandes fréquentielles, lesdites première et seconde bandes fréquentielles étant différentes ; et
- transmettre chacun desdits premier et second fragments sur la bande fréquentielle à laquelle il est associé.

En effet, l'utilisation de plusieurs bandes fréquentielles pour envoyer un message donné permet de bénéficier des caractéristiques des différentes bandes fréquentielles en termes de débit, portée, résistance aux perturbateurs. Ainsi, le procédé de transmission décrit permet d'augmenter la capacité de nombre d'échanges dans le réseau.

Dans un mode particulier de réalisation, les bandes fréquentielles dudit ensemble de bandes fréquentielles sont disjointes.

Selon un mode de réalisation particulier, le message étant fragmenté en N fragments, N étant un entier naturel supérieur ou égal à 2, la première bande fréquentielle est associée aux fragments impairs et la seconde bande fréquentielle est associée aux fragments pairs. Selon un autre mode de réalisation particulier, la prochaine bande fréquentielle dudit ensemble de bandes fréquentielles disponible est associée au prochain fragment à transmettre.

Selon un mode de réalisation particulier, ledit message est fragmenté conformément au protocole 6LowPAN.

Selon un mode de réalisation particulier, l'ensemble de bandes fréquentielles comprend :
- la bande fréquentielle CENELEC A;
- la bande fréquentielle CENELEC B; et
- la bande fréquentielle FCC ou la bande fréquentielle ARIB.

Un dispositif noeud d'un réseau d'alimentation électrique utilisant des communications par courants porteurs en ligne est également décrit. Le dispositif noeud est configuré pour communiquer avec un autre dispositif noeud dudit réseau appartenant à son voisinage réseau.

Il comprend :
- des moyens pour fragmenter un message en au moins un premier fragment et un second fragment ;
- des moyens pour associer, audit premier fragment, une première bande fréquentielle d'un ensemble de bandes fréquentielles comprenant au moins deux bandes fréquentielles et pour associer, audit second fragment, une seconde bande fréquentielle dudit ensemble de bandes fréquentielles, lesdites première et seconde bandes fréquentielles étant différentes ;
- des moyens pour transmettre chacun desdits premier et second fragments sur la bande fréquentielle à laquelle il est associé.

Un réseau de communication par courants porteurs en ligne est décrit. Le réseau comprend une pluralité de dispositifs noeuds, ladite pluralité de dispositifs noeuds comprenant au moins un dispositif noeud selon le mode de réalisation précédent, dit dispositif noeud multi-bande, lequel comprend dans son voisinage réseau au moins un dispositif noeud comprenant :
- des moyens de réception de chacun desdits premier et second fragments sur la bande fréquentielle à laquelle il est associé ; et
- des moyens de réassemblage desdits premier et second fragments pour reconstruire ledit message.

Selon un mode de réalisation particulier un message devant être transmis en mode diffusion à une pluralité de dispositifs noeuds voisins est transmis par ledit dispositif noeud multi-bande sur une unique bande fréquentielle et un message devant être transmis en point-à-point à un dispositif noeud voisin est fragmenté et transmis par ledit dispositif noeud multi-bande sur une pluralité de bandes fréquentielles dans le cas où ledit dispositif noeud voisin comprend des moyens de réassemblage desdits premier et second fragments pour reconstruire ledit message et est transmis par ledit dispositif noeud multi-bande sur une unique bande fréquentielle sinon.

Un produit programme d'ordinateur est décrit. Il comprend des instructions pour mettre en oeuvre, par un dispositif noeud, le procédé selon l'un des modes de réalisation précédents, lorsque ledit programme est exécuté par un processeur du dispositif noeud.

Un support de stockage est également décrit. Il stocke un programme d'ordinateur comprenant des instructions pour mettre en oeuvre, par un dispositif noeud, le procédé selon l'un des modes de réalisation précédents, lorsque ledit programme est exécuté par un processeur du dispositif noeud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un réseau de communication maillé selon un mode de réalisation ;
[Fig. 2] illustre schématiquement un procédé de transmission d'un message selon un mode particulier de réalisation ;
[Fig. 3] illustre schématiquement les différentes couches d'un modèle OSI dans le cas particulier de la norme G3-PLC ;
[Fig. 4] illustre schématiquement un entête d'un fragment conforme au protocole 6LoWPAN ;
[Fig. 5] illustre schématiquement un procédé de transmission d'un message selon un mode particulier de réalisation ;
[Fig. 6] illustre schématiquement un procédé de réception d'un message selon un mode particulier de réalisation ; et,
[Fig. 7] illustre schématiquement un exemple d'architecture matérielle d'un dispositif noeud du réseau de communication maillé selon un mode de réalisation.

### EXPOSE DETAILLE DE MODES DE REALISATION

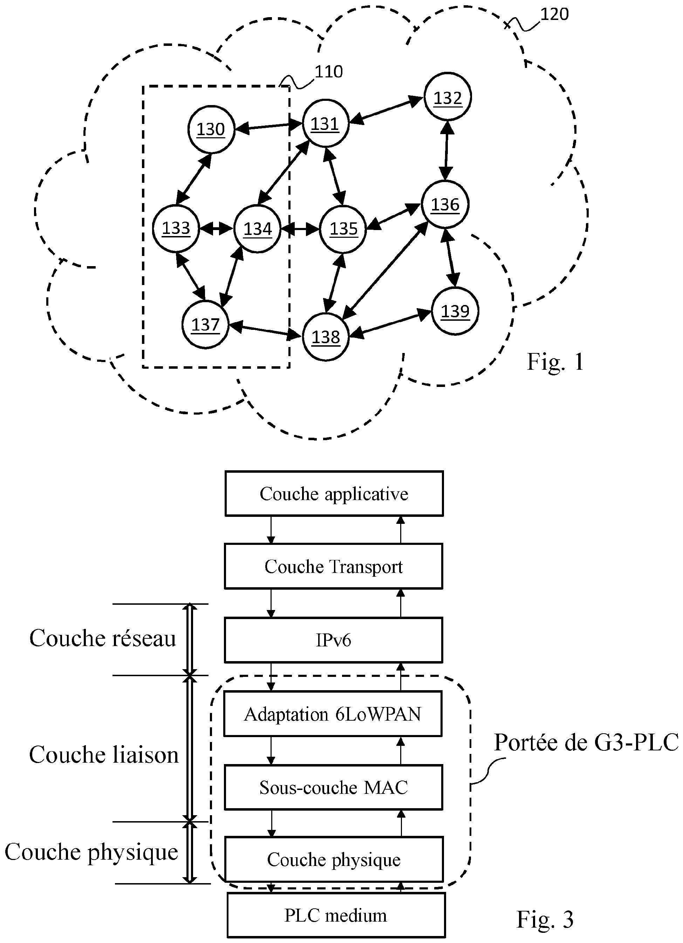

La **Fig. 1** illustre schématiquement un réseau de communication maillé 120. Le réseau de communication maillé 120 est par exemple un réseau d'alimentation électrique de type AMM. Le réseau de communication maillé 120 s'appuie sur des communications par courants porteurs en ligne PLC pour permettre à un dispositif noeud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs noeuds du réseau de communication maillé 120. Le réseau de communication maillé 120 peut comporter d'autres dispositifs noeuds, par exemple installés au niveau de transformateurs électriques. Le réseau de communication 120 a donc une structure maillée, telle que représentée schématiquement sur la Fig. 1 grâce à des flèches, où des dispositifs noeuds jouent le rôle de relais pour augmenter la portée des communications dans le réseau de communication maillé 120, comme détaillé ci-après. Ainsi, un même compteur électrique intelligent dispose potentiellement de plusieurs chemins pour atteindre le concentrateur de données, et vice versa.

La présente invention est ainsi particulièrement adaptée au contexte de la technologie G3-PLC (marque déposée).

Le réseau de communication maillé 120 comporte ainsi une pluralité de dispositifs noeuds 130, 131, 132, 133, 134, 135, 136, 137, 138, 139. A chaque dispositif noeud du réseau de communication maillé 120 est associé un voisinage réseau. Sur la Fig. 1, le dispositif noeud 133 est associé à un voisinage réseau 110 englobant les dispositifs noeuds 130, 134 et 137. En effet, dans le réseau de communication maillé 120, un signal ou un message diffusé par un dispositif noeud (tel que le dispositif noeud 133) n'est en général pas visible en tout point dudit réseau de communication. Chaque dispositif noeud émetteur de signaux ou de messages dispose alors d'un voisinage réseau, c'est-à-dire d'un sous-ensemble dudit réseau de communication maillé 120 dans lequel tout dispositif noeud peut recevoir de manière intelligible lesdits signaux ou messages directement en provenance du dispositif noeud ayant diffusé lesdits signaux ou messages. Le voisinage réseau correspond à la portée des signaux émis, en fonction de paramètres prédéterminés de transmission (e.g. puissance, schéma de modulation et de codage, topologie réseau...) du dispositif noeud à la source desdits signaux et aussi potentiellement en fonction de caractéristiques du canal de communication (atténuation, bruit, impédance...).

Le réseau de communication maillé 120 s'appuie sur un protocole de routage de type réactif, tel que le protocole LOADng (« Lightweight On-demand Ad hoc Distance-vector Routing Protocol - Next Génération » en anglais). Contrairement aux protocoles de routage de type proactif qui s'appuient sur une connaissance globale de topologie réseau, les protocoles de routage de type réactif s'appuient sur des découvertes de routes à la demande, chaque dispositif noeud du réseau ayant alors besoin uniquement d'avoir connaissance de son propre voisinage réseau pour router des données dans le réseau de communication maillé 120.

Pour découvrir une route appropriée dans le réseau de communication maillé 120 depuis un dispositif noeud source (par exemple le dispositif noeud 133) jusqu'à un dispositif noeud destination (par exemple le dispositif noeud 132), il est connu que le dispositif noeud source diffuse (« broadcast » en anglais) une requête de découverte de route, appelée RREQ (« Route REQuest » en anglais). Cette requête de découverte de route est reçue par chaque dispositif noeud dans le voisinage réseau dudit dispositif noeud source. Chaque dispositif noeud dans le voisinage réseau dudit dispositif noeud source relaie, par diffusion, ladite requête si ledit dispositif noeud en question n'est pas le dispositif noeud destination. Par diffusion de proche en proche, plusieurs requêtes de découverte de route sont typiquement reçues par le dispositif noeud destination, chacune de ces requêtes ayant suivi un chemin différent dans le réseau de communication maillé 120.

Chaque dispositif noeud qui est à l'origine d'un message, comme par exemple une requête de découverte de route, y inclut un identifiant qui lui est propre, ainsi qu'un numéro de séquence, tel que défini dans le protocole LOADng. Ce numéro de séquence est une valeur de compteur propre à chaque dispositif noeud du réseau de communication maillé 120. A chaque fois qu'un dispositif noeud génère un nouveau message, ledit dispositif noeud incrémente son compteur et inclut dans le message en question la valeur dudit compteur. Ainsi, lorsqu'un dispositif noeud reçoit un message, ledit dispositif noeud analyse l'identifiant du dispositif noeud à l'origine du message et le numéro de séquence inclus dans le message, et peut déterminer si le message reçu est effectivement un nouveau message ou une nouvelle copie d'un message déjà reçu.

Chaque dispositif noeud peut toutefois décider de ne pas relayer une requête de découverte de route, lorsqu'un ou plusieurs critères ne sont pas remplis. Notamment, avant de décider de relayer ladite requête, le dispositif noeud en question vérifie typiquement si ladite requête comporte une information représentative d'un coût de route, depuis le dispositif noeud source jusqu'au dispositif noeud en question, qui est meilleur que le coût de route représenté par une information contenue dans une autre requête de découverte de route précédemment reçue par le dispositif noeud en question. En d'autres termes, le dispositif noeud en question relaie, par diffusion, ladite requête si ladite requête concerne un chemin qui a suivi, depuis le dispositif noeud source jusqu'au dispositif noeud en question, un trajet de plus faible coût que toute autre requête précédemment reçue par le dispositif noeud en question (donc pour la même découverte de route).

Le coût d'une route peut s'appuyer sur une ou plusieurs métriques. Par exemple, le coût de route est un nombre de sauts (« hops » en anglais) subis par la requête en question depuis le dispositif noeud source. Selon un autre exemple, le coût de route est le résultat d'un calcul qui dépend de la bande passante des liens franchis, par la requête en question depuis le dispositif noeud source. Selon encore un autre exemple, le coût de route est proportionnel à la latence subie par la requête en question depuis le dispositif noeud source. D'autres métriques peuvent être utilisées pour établir un coût de route, c'est-à-dire un coût de transit, depuis le dispositif noeud source jusqu'au dispositif noeud destination.

Lorsqu'un dispositif noeud décide de relayer, par diffusion, une requête de découverte de route, le dispositif noeud en question met à jour l'information de coût de route contenue dans ladite requête, de manière à prendre en compte que ladite requête est passée par le dispositif noeud en question. Ainsi, selon un tel principe, plusieurs requêtes de découverte de route parviennent typiquement au dispositif noeud destination, chacune comportant une information de coût de route que ladite requête a suivi pour être propagée depuis le dispositif noeud source jusqu'au dispositif noeud destination. Le trajet emprunté par ladite requête de découverte de route associée au meilleur coût de route est ensuite sélectionné pour permettre au dispositif noeud source de transmettre des données au dispositif noeud destination. Pour activer la route en question le dispositif noeud destination transmet une réponse de découverte de route, appelée RREP (« Route REPly » en anglais). Cette réponse de découverte de route est transmise de proche en proche en suivant le chemin inverse de la requête de découverte de route qui était associée au meilleur coût de route. Chaque dispositif noeud recevant la réponse de découverte de route met à jour une table de routage interne, au niveau de la couche liaison de données DLL, afin d'y indiquer que tout message ultérieur transmis en mode point-à-point (« unicast » en anglais) depuis le dispositif noeud source en question vers le dispositif noeud destination en question doit être transmis ou relayé vers tel ou tel dispositif noeud de son voisinage réseau. Au sein de la couche liaison, aussi appelée couche MAC (« Medium Access Control » en anglais), les tables de routage sont préférentiellement implémentées dans une sous-couche d'adaptation en charge de la mise en oeuvre du protocole de routage dans le réseau de communication. Par exemple, cette sous-couche d'adaptation est conforme au protocole 6LoWPAN (pour « IPv6 over Low power Wireless Personal Area Networks » en anglais), qui a été initialement développé pour supporter IPv6 dans le cadre du standard IEEE 802.15.4 et qui a été étendu à la technologie G3-PLC (marque déposée). A noter que le protocole 6LoWPAN s'appuie lui-même sur le protocole de routage de type réactif LOADng susmentionné.

Grâce aux tables de routage ainsi configurées, des communications point-à-point (« unicast » en anglais) peuvent être effectuées par toute paire de dispositifs noeuds du réseau de communication maillé 120. Des dispositifs noeuds intermédiaires servent donc de relais lorsque les dispositifs noeuds de ladite paire ne sont pas dans le voisinage réseau l'un de l'autre, les communications s'opèrent ainsi de proche en proche, chaque dispositif noeud s'appuyant sur un de ses propres voisins pour faire suivre des messages jusqu'à leurs destinataires respectifs.

Pour communiquer entre dispositifs noeuds voisins (c'est-à-dire des dispositifs noeuds qui sont dans le voisinage réseau l'un de l'autre), les messages sont transmis sous forme de trames modulées. Lorsqu'une trame modulée est spécifiquement adressée à un dispositif noeud voisin et qu'elle est correctement démodulée par celui-ci, ledit dispositif noeud voisin retransmet un acquittement ACK au dispositif noeud qui lui a adressé ladite trame modulée. L'acquittement ACK est transmis sur la même bande fréquentielle que la trame modulée à laquelle ledit acquittement ACK est associé.

Plusieurs bandes fréquentielles sont définies pour supporter la transmission de ces trames modulées, un schéma de modulation adapté étant associé avec chacune de ces bandes fréquentielles. Chaque trame transmise sous forme de signaux modulés débute par un préambule prédéfini en fonction du schéma de modulation selon lequel lesdits signaux ont été modulés. Le préambule est adapté pour permettre de se synchroniser en réception sur ladite trame, c'est-à-dire de pouvoir déterminer un instant effectif de début de trame. Pour ce faire, le préambule comporte typiquement une pluralité de copies successives d'un même symbole. Le contenu effectif et la durée du préambule sont ainsi prédéfinis et dépendent du schéma de modulation utilisé. Les préambules de plusieurs trames sont identiques lorsque le même schéma de modulation est appliqué, et diffèrent sinon.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais).

En termes de bandes fréquentielles utilisables dans le cadre de la mise en oeuvre du réseau de communication maillé 120, on peut citer : la bande fréquentielle CENELEC A, qui va d'approximativement 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Il est alors possible d'utiliser : un premier schéma de modulation à trente-six porteuses dans la bande fréquentielle CENELEC A ; un second schéma de modulation à soixante-douze porteuses dans la bande fréquentielle FCC ; un troisième schéma de modulation à cinquante-quatre porteuses dans la bande fréquentielle ARIB ; et un quatrième schéma de modulation à seize porteuses dans la bande fréquentielle CENELEC B. Il apparaît de ce qui précède qu'un dispositif noeud peut utiliser simultanément plusieurs bandes fréquentielles pour communiquer avec un ou plusieurs de ses voisins, en appliquant un mécanisme de transmission adapté. Toutefois, il apparaît que les bandes fréquentielles ARIB et FCC ne peuvent pas être utilisées simultanément par un même dispositif noeud étant donné qu'elles se recouvrent l'une l'autre.

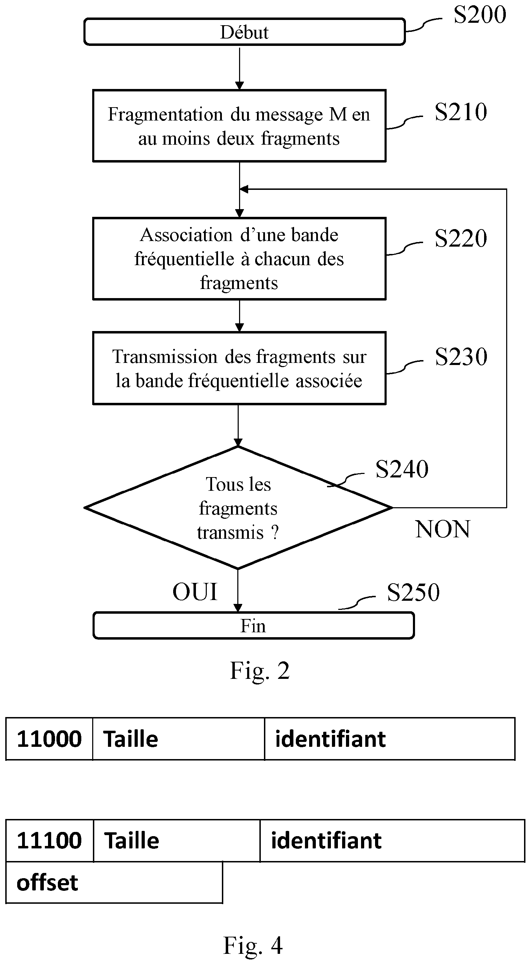

La **Fig. 2** illustre schématiquement un procédé de transmission d'un message selon un mode particulier de réalisation. Un message M doit être transmis par un dispositif noeud source (par exemple le dispositif noeud 133) à un dispositif noeud destinataire appartenant à son voisinage réseau (par exemple le dispositif noeud 134). Ce mode de réalisation est décrit notamment en lien avec la norme G3-PLC. Toutefois, il ne se limite pas à cette seule norme et pourrait être appliqué à d'autres normes, e.g. aux spécifications PRIME (pour « PoweRline Intelligent Metering Evolution » en anglais), c'est-à-dire notamment dans un réseau de communication par courants porteurs en ligne qui n'a pas de structure maillée mais qui a une structure en arbre.

Le procédé démarre à une étape S200.

Lors d'une étape S210, le message qui est par exemple encapsulé dans un paquet IP, e.g. un paquet IPv6 (paquet de taille jusqu'à 1400 octets), est fragmenté en au moins deux fragments afin de l'adapter aux contraintes de la couche MAC, notamment à la taille des trames MAC.

A cet effet, la norme G3-PLC incorpore le protocole 6LoWPAN lequel permet d'adapter des paquets de données IPv6 aux contraintes de G3-PLC, notamment en les fragmentant. En effet, les trames MAC utilisées par G3-PLC sont de tailles bien inférieures (400 octets maximum disponibles par paquet pour la partie IP) aux paquets IPv6 de 1 400 octets.

La couche adaptation de 6LoWPAN se situe entre la couche réseau et la sous-couche MAC du modèle OSI comme illustré sur la **Fig.3****.** Elle reçoit de la couche réseau des paquets IPv6 de 1 280 octets et le cas échéant les fragmente. Bien entendu dans le cas d'un paquet IPv6 suffisamment petit pour être contenu dans une seule trame MAC G3-PLC aucune fragmentation n'est effectuée. Le procédé s'applique donc au cas où le message est suffisamment long pour devoir être fragmenté.

Chaque fragment est généralement précédé d'un en-tête de fragmentation, par exemple de 4 ou 5 octets.

Cet en-tête contient par exemple les informations suivantes comme illustré par la **Fig. 4** :
5 bits permettant d'identifier qu'il s'agit d'un fragment. Le premier fragment aura la valeur « 11000 » et les suivants « 11100 » ;
11 bits pour indiquer la taille du paquet IP avant fragmentation (champ « datagram_size »);
16 bits pour indiquer un identifiant (champ « datagram_tag ») commun à tous les fragments d'un même paquet IP ;
8 bits pour indiquer la position (champ « datagram_offset ») du fragment dans le paquet IP (uniquement présent dans les fragments suivant le premier).

La fragmentation est notamment décrite dans la section 5.3 de la recommandation RFC 4944 (publiée en septembre 2007).

Lors d'une étape S220, une première bande fréquentielle est associée à un premier fragment parmi lesdits au moins deux fragments issus de la fragmentation du message M et une seconde bande fréquentielle différente de la première bande fréquentielle est associée à l'autre desdits au moins deux fragments. Les premières et secondes bandes fréquentielles associées sont par exemple sélectionnées dans l'ensemble des bandes fréquentielles autorisées par G3-PLC, i.e. CENELEC A, CENELEC B, et ARIB ou FCC. Dans une variante, les premières et secondes bandes fréquentielles associées sont sélectionnées dans un sous-ensemble des bandes fréquentielles autorisées par G3-PLC, le sous-ensemble comprenant au moins deux bandes parmi toutes les bandes autorisées par G3-PLC. Ainsi, selon l'invention, des fragments issus d'un même paquet IP peuvent être associés en vue de leur transmission à des bandes fréquentielles différentes.

Dans un mode particulier de réalisation, les bandes fréquentielles sont non seulement différentes mais plus particulièrement disjointes.

Les modes de réalisation décrits pour deux fragments peuvent être étendus au cas de plus de deux fragments, e.g. N fragments avec N entier naturel. Dans ce cas, une même bande fréquentielle peut être associée à des fragments différents. Cependant, des bandes fréquentielles différentes sont associées à au moins deux fragments du message M parmi les N fragments.

Dans un mode de réalisation particulier, les bandes fréquentielles sont associées de manière alternative aux fragments. Par exemple, dans le cas de deux bandes fréquentielles à associer, la première bande fréquentielle est associée aux fragments impairs (i.e. les fragments 1, 3, 5, etc) et la seconde bande fréquentielle est associées aux fragments pairs (i.e. les fragments 2, 4, 6, etc). Dit autrement, deux fragments qui se suivent dans le message sont transmis dans des bandes fréquentielles différentes.

Dans une variante de réalisation, les M premiers fragments sont associés aux M premières bandes fréquentielles disponibles, avec M un entier naturel inférieur à N. Un mécanisme de type CSMA/CA (acronyme anglais de « Carrier-Sense Multiple Access withCollision Avoidance) permet de déterminer si une bande est disponible. Par exemple, M=3. Dès qu'un acquittement ACK est reçu via une bande fréquentielle, alors le fragment qui suit les M premiers fragments dans le message M est transmis sur cette bande fréquentielle et ainsi de suite. Dit autrement, un fragment à envoyer est transmis sur la première bande fréquentielle disponible.

Lors d'une étape S230, le fragment est transmis sur la bande fréquentielle qui lui est associée. Ainsi, les différents fragments peuvent avantageusement être transmis en parallèle sur des bandes fréquentielles différentes. La transmission d'un fragment sur le médium, i.e. sur la ligne de courant, comprend classiquement différentes étapes notamment une segmentation des fragments afin de les adapter à la couche physique et une modulation OFDM du signal. La segmentation consiste à partitionner une trame MAC (acronyme anglais de « Media Access Control ») en PSDUs (acronyme anglais de « PHY Service Data Unit »). Tous les PSDU issus d'un même fragment sont modulés en utilisant un même schéma de modulation.

Lors d'une étape S240, si tous les fragments ont été transmis alors le procédé est terminé (S250). Sinon, le procédé reprend à l'étape S220 avec le prochain fragment à transmettre.

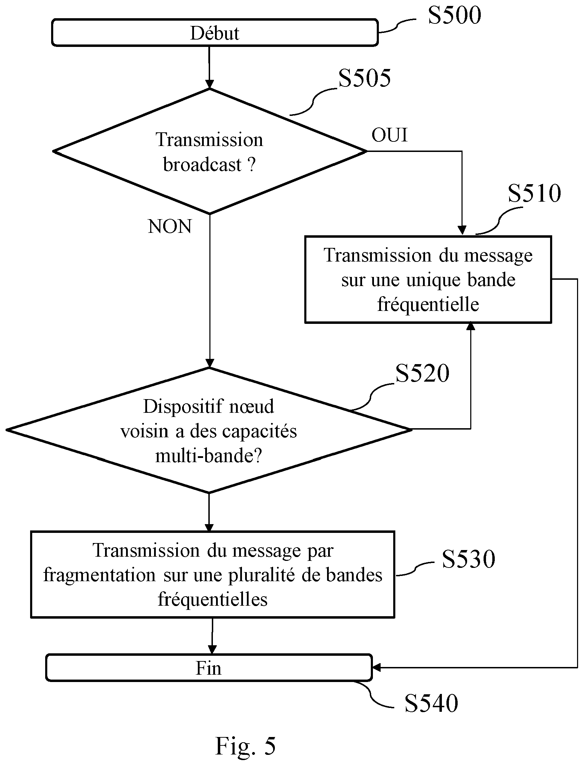

La **Fig. 5** illustre schématiquement un procédé de transmission d'un message selon un mode particulier de réalisation. Le procédé de la Fig. 5 utilise notamment le procédé décrit en lien avec la Fig. 2. Un message M doit être transmis par un dispositif noeud source (par exemple le dispositif noeud 133) à un ou des dispositifs noeuds voisins destinataires en mode diffusion ou en mode point-à-point (« unicast » en anglais). A titre d'exemple, les messages de découverte d'une route dans le réseau de communication sont généralement transmis en mode diffusion. Une fois la route définie, les messages ultérieurs sont envoyés en mode point-à-point.

Le procédé démarre lors d'une étape S500.

Lors d'une étape S505, le dispositif noeud source vérifie si la transmission du message est une diffusion du message à une pluralité de dispositifs noeuds voisins ou une transmission du message en point à point à un unique dispositif noeud voisin. Si le message est diffusé alors le procédé continue à une étape S510, sinon il continue à une étape S520.

Lors de l'étape S510, le dispositif noeud source diffuse le message à la pluralité de dispositifs noeuds voisins en utilisant une seule et unique bande fréquentielle (cas mono-bande). Cette bande fréquentielle est celle supportée par l'ensemble des dispositifs noeuds du réseau.

Lors de l'étape S520, le dispositif noeud source détermine si le dispositif noeud destinataire du message a des capacités multi-bandes, i.e. s'il est configuré pour recevoir un message sur plusieurs bandes fréquentielles ou s'il a uniquement des capacités mono-bande, i.e. s'il est configuré pour recevoir un message sur une seule bande fréquentielle. Si c'est le cas alors le procédé continue à une étape S530, sinon le procédé continue à l'étape S510. Dans un exemple de réalisation, un échange de messages selon un protocole prédéfini permet, par exemple, au dispositif noeud source d'obtenir des informations quant aux capacités de communication d'un dispositif noeud voisin. Par exemple, le dispositif noeud source adresse au dispositif noeud voisin un exemplaire d'un premier message dans chacune des bandes fréquentielles dans lesquelles il peut communiquer du fait de sa configuration, et le dispositif noeud voisin est configuré pour reconnaître un tel message et y répondre par un second message dans chacune des bandes fréquentielles dans laquelle il a pu le recevoir. Dans un contexte G3-PLC, par exemple, les exemplaires du premier message contiennent une information selon laquelle une estimation de canal est sollicitée auprès du dispositif noeud voisin, pour la bande fréquentielle dans laquelle il a reçu le message (requête dite « Tone Map »). Avantageusement, l'information selon laquelle une estimation canal est sollicitée auprès du dispositif noeud voisin par le dispositif noeud source est alors un indicateur *Tone Map Request* d'un entête de contrôle de trame défini selon la recommandation ITU-T G9903. Ainsi, le dispositif noeud voisin répondra à la requête *Tone Map Request* en envoyant au dispositif noeud source, dans chacune des bandes fréquentielles dans laquelle il a reçu un exemplaire du premier message, un second message comprenant des informations représentatives d'au moins une estimation de canal sous la forme d'un bloc de données *Tone Map Response* tel que défini selon la recommandation ITU-T G9903. Le dispositif source pourra donc connaitre et mémoriser des informations quant aux bandes fréquentielles qu'il peut utiliser pour communiquer avec le dispositif noeud voisin.

D'autres méthodes peuvent être utilisées.

Lors de l'étape S530, le dispositif noeud source transmet le message au dispositif noeud destinataire en appliquant le procédé décrit en lien avec la Fig. 2.

Le procédé se termine lors d'une étape S540.

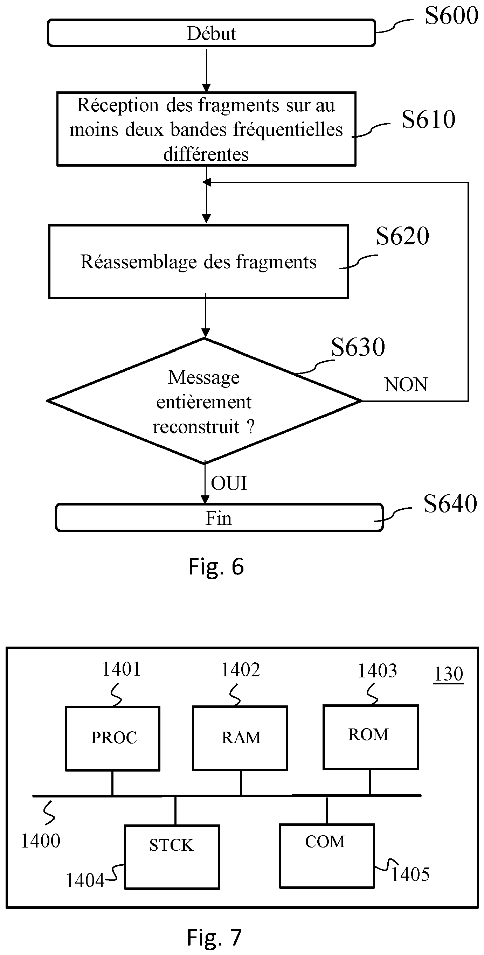

La **Fig. 6** illustre schématiquement un procédé de réception d'un message selon un mode particulier de réalisation. Un message M transmis par un dispositif noeud source (par exemple le dispositif noeud 133) est reçu par un dispositif noeud appartenant à son voisinage réseau (par exemple le dispositif noeud 134).

Ce mode de réalisation est décrit notamment en lien avec la norme G3-PLC. Toutefois, il ne se limite pas à cette seule norme et pourrait être appliqué à d'autres normes, e.g. les spécifications PRIME.

Le procédé démarre à une étape S600.

Lors d'une étape S610, le dispositif noeud destinataire reçoit des fragments envoyés par le dispositif noeud source. Cette étape de réception d'un fragment sur le médium, i.e. sur la ligne de courant, comprend classiquement différentes étapes notamment une démodulation OFDM du signal et un réassemblage des PSDUs afin de reconstruire les trames MAC. Ces processus sont les processus inverses des processus de segmentation et de modulation mis en oeuvre par le dispositif noeud source lors de l'étape S230. Les différents fragments peuvent être reçus dans n'importe quel ordre.

Lors d'une étape S620, le dispositif noeud destinataire commence à reconstruire le message d'origine dont la taille est indiquée dans le champ datagram_size. A cet effet, le dispositif noeud destinataire utilise le champ datagram_offset afin de déterminer la position des différents fragments dans le message d'origine, e.g. dans le paquet IP. Par exemple, il peut placer dans un buffer dédié, dit buffer de réassemblage, les données utiles (« data payload » en anglais), i.e. sans les entêtes, à la position indiquée par le champ datagram_offset. La taille du buffer de réassemblage est déterminée à partir du champ datagram_size.

Si tous les fragments sont reçus et donc le message entièrement reconstruit, le procédé se termine (S640). Si tous les fragments ne sont pas encore reçus, le procédé continue à l'étape S610 jusqu'à réception de l'ensemble des fragments formant le message M. Selon un mode particulier de réalisation, le dispositif noeud destinataire lorsqu'il reçoit un premier fragment du message M déclenche un compteur temporel. Si tous les fragments du message M ne sont pas reçus lorsque le compteur atteint une valeur seuil prédéfinie, e.g. 60 secondes, alors les fragments reçus sont ignorés.

La **Fig. 7** illustre schématiquement un exemple d'architecture matérielle d'un dispositif noeud 130 du réseau de communication maillé 120 selon un mode de réalisation. Un tel dispositif noeud est qualifié de multi-bande car capable de transmettre un message sur plusieurs bandes fréquentielles. On note que la Fig. 7 pourrait aussi illustrer schématiquement un exemple d'architecture matérielle d'un module de traitement compris dans le dispositif noeud.

Selon l'exemple d'architecture matérielle représenté à la Fig. 7, le dispositif noeud 130 comprend alors, reliés par un bus de communication 1400 : un processeur ou CPU (« Central Processing Unit » en anglais) 1401 ; une mémoire vive RAM (« Random Access Memory » en anglais) 1402 ; une mémoire morte ROM (« Read Only Memory » en anglais) 1403 ; une unité de stockage telle qu'un disque dur (ou un lecteur de support de stockage, tel qu'un lecteur de cartes SD (« Secure Digital » en anglais) 1404 ; au moins une interface de communication 1405 permettant au dispositif noeud 130 de communiquer avec les dispositifs noeuds appartenant à son voisinage réseau, e.g. les dispositif noeud 131 et 133.

Le processeur 1401 est capable d'exécuter des instructions chargées dans la RAM 1402 à partir de la ROM 1403, d'une mémoire externe (non représentée), d'un support de stockage (tel qu'une carte SD), ou d'un réseau de communication. Lorsque le dispositif noeud est mis sous tension, le processeur 1401 est capable de lire de la RAM 1402 des instructions et de les exécuter. Ces instructions forment un programme d'ordinateur causant la mise en oeuvre, par le processeur 1401, de tout ou partie des procédés décrits en relation avec les Figs. 2, 5 et 6.

Les procédés décrits en relation avec les Figs. 2, 5 et 6 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif noeud 130 comprend de la circuiterie électronique configurée pour mettre en oeuvre les procédés décrits en relation avec les Figs. 2, 5 et 6.

## Revendications

1. Un procédé de transmission pour transmettre un message à partir d'un premier dispositif noeud vers un second dispositif noeud appartenant à un voisinage réseau dudit premier dispositif noeud, lesdits premier et second dispositifs noeuds appartenant à un réseau d'alimentation électrique utilisant des communications par courants porteurs en ligne, le procédé de transmission étant **caractérisé en ce qu'**il comprend les étapes suivantes mises en oeuvre par ledit premier dispositif noeud :
- fragmenter (S210) ledit message en N fragments, N étant un entier naturel supérieur ou égal à 2 ;
- associer (S220), aux fragments impairs, une première bande fréquentielle d'un ensemble de bandes fréquentielles comprenant au moins deux bandes fréquentielles et associer, aux fragments pairs, une seconde bande fréquentielle dudit ensemble de bandes fréquentielles, lesdites première et seconde bandes fréquentielles étant différentes ; et
- transmettre (S230) chacun desdits premier et second fragments sur la bande fréquentielle à laquelle il est associé.

2. Le procédé selon la revendication 1, dans lequel ledit message est fragmenté conformément au protocole 6LowPAN.

3. Le procédé selon la revendication 1 ou 2, lequel comprend en outre les étapes suivantes mises en oeuvre par ledit second dispositif noeud :
- recevoir chacun desdits N fragments sur la bande fréquentielle à laquelle il est associé ; et
- réassembler lesdits N fragments pour reconstruire ledit message.

4. Le procédé selon l'une quelconque des revendications 1 à 3, dans lequel ledit ensemble de bandes fréquentielles comprend :
- la bande fréquentielle CENELEC A;
- la bande fréquentielle CENELEC B; et
- la bande fréquentielle FCC ou la bande fréquentielle ARIB.

5. Un dispositif noeud d'un réseau d'alimentation électrique utilisant des communications par courants porteurs en ligne, ledit dispositif noeud étant configuré pour transmettre un message vers un autre dispositif noeud dudit réseau appartenant à son voisinage réseau, ledit dispositif noeud comprenant :
- des moyens pour fragmenter ledit message en N fragments, N étant un entier naturel supérieur ou égal à 2;
- des moyens pour associer, aux fragments impairs, une première bande fréquentielle d'un ensemble de bandes fréquentielles comprenant au moins deux bandes fréquentielles et pour associer, aux fragments pairs, une seconde bande fréquentielle dudit ensemble de bandes fréquentielles, lesdites première et seconde bandes fréquentielles étant différentes ; et
- des moyens pour transmettre chacun desdits premier et second fragments sur la bande fréquentielle à laquelle il est associé.

6. Un réseau d'alimentation électrique utilisant des communications par courants porteurs en ligne, ledit réseau comprenant une pluralité de dispositifs noeuds, ladite pluralité de dispositifs noeuds comprenant au moins un dispositif noeud selon la revendication 5 et ledit autre dispositif noeud comprenant :
- des moyens de réception de chacun desdits premier et second fragments sur la bande fréquentielle à laquelle il est associé ; et
- des moyens de réassemblage desdits premier et second fragments pour reconstruire ledit message.

7. Le réseau d'alimentation électrique selon la revendication 6, dans lequel un message devant être transmis en mode diffusion à une pluralité de dispositifs noeuds voisins est transmis par ledit dispositif noeud selon la revendication 5 sur une unique bande fréquentielle et un message devant être transmis en point-à-point à un dispositif noeud voisin est fragmenté et transmis par ledit dispositif noeud selon la revendication 5 sur une pluralité de bandes fréquentielles dans le cas où ledit dispositif noeud voisin comprend des moyens de réassemblage desdits premier et second fragments pour reconstruire ledit message et est transmis par ledit dispositif noeud selon la revendication 5 sur une unique bande fréquentielle sinon.

8. Un produit programme d'ordinateur **caractérisé en ce qu'**il comprend des instructions pour mettre en oeuvre, par un dispositif noeud, le procédé selon l'une quelconque des revendications 1 à 4, lorsque ledit programme est exécuté par un processeur du dispositif noeud.

9. Un support de stockage **caractérisé en ce qu'**il stocke un programme d'ordinateur comprenant des instructions pour mettre en oeuvre, par un dispositif noeud, le procédé selon l'une quelconque des revendications 1 à 4, lorsque ledit programme est exécuté par un processeur du dispositif noeud.

## Patentansprüche

1. Ein Übertragungsverfahren zum Übertragen einer Nachricht von einer ersten Knotenvorrichtung an eine zweite Knotenvorrichtung, die zu einer Netzwerkumgebung der ersten Knotenvorrichtung gehört, wobei die erste und die zweite Knotenvorrichtung zu einem elektrischen Versorgungsnetzwerk gehören, das Powerline-Kommunikationen verwendet, wobei das Übertragungsverfahren **dadurch gekennzeichnet ist, dass** es die folgenden Schritte beinhaltet, die durch die erste Knotenvorrichtung umgesetzt werden:
- Fragmentieren (S210) der Nachricht in N Fragmente, wobei N eine natürliche Zahl größer als oder gleich 2 ist;
- Zuordnen (S220) eines ersten Frequenzbandes eines Satzes Frequenzbänder, der mindestens zwei Frequenzbänder beinhaltet, zu den ungeraden Fragmenten und Zuordnen eines zweiten Frequenzbandes des Satzes Frequenzbänder zu den geraden Fragmenten, wobei sich das erste und das zweite Frequenzband voneinander unterscheiden; und
- Übertragen (S230) jedes von dem ersten und dem zweiten Fragment auf dem ihm zugeordneten Frequenzband.

2. Verfahren nach Anspruch 1, wobei die Nachricht gemäß dem Protokoll 6LowPAN fragmentiert wird.

3. Verfahren nach Anspruch 1 oder 2, das ferner die folgenden Schritte beinhaltet, die durch die zweite Knotenvorrichtung umgesetzt werden:
- Empfangen jedes der N Fragmente auf dem ihm zugeordneten Frequenzband; und
- Wiederzusammensetzen der N Fragmente, um die Nachricht zu rekonstruieren.

4. Verfahren nach einem beliebigen der Ansprüche 1 bis 3, wobei der Satz Frequenzbänder Folgendes beinhaltet:
- das Frequenzband CENELEC A;
- das Frequenzband CENELEC B; und
- das Frequenzband FCC oder das Frequenzband ARIB.

5. Eine Knotenvorrichtung eines elektrischen Versorgungsnetzwerks, das Powerline-Kommunikationen verwendet, wobei die Knotenvorrichtung dazu konfiguriert ist, eine Nachricht an eine andere Knotenvorrichtung des Netzwerks, die zu ihrer Netzwerkumgebung gehört, zu übertragen, wobei die Knotenvorrichtung Folgendes beinhaltet:
- Mittel zum Fragmentieren der Nachricht in N Fragmente, wobei N eine natürliche Zahl größer als oder gleich 2 ist;
- Mittel zum Zuordnen eines ersten Frequenzbandes eines Satzes Frequenzbänder, der mindestens zwei Frequenzbänder beinhaltet, zu den ungeraden Fragmenten und zum Zuordnen eines zweiten Frequenzbandes des Satzes Frequenzbänder zu den geraden Fragmenten, wobei sich das erste und das zweite Frequenzband voneinander unterscheiden; und
- Mittel zum Übertragen jedes von dem ersten und dem zweiten Fragment auf dem ihm zugeordneten Frequenzband.

6. Ein elektrisches Versorgungsnetzwerk, das Powerline-Kommunikationen verwendet, wobei das Netzwerk eine Vielzahl von Knotenvorrichtungen beinhaltet, wobei die Vielzahl von Knotenvorrichtungen mindestens eine Knotenvorrichtung nach Anspruch 5 beinhaltet und die andere Knotenvorrichtung Folgendes beinhaltet:
- Mittel zum Empfangen jedes von dem ersten und dem zweiten Fragment auf dem ihm zugeordneten Frequenzband; und
- Mittel zum Wiederzusammensetzen des ersten und des zweiten Fragments, um die Nachricht zu rekonstruieren.

7. Elektrisches Versorgungsnetzwerk nach Anspruch 6, wobei eine per Broadcast-Modus an eine Vielzahl von benachbarten Knotenvorrichtungen zu übertragende Nachricht durch die Knotenvorrichtung nach Anspruch 5 auf einem einzigen Frequenzband übertragen wird und eine von Punkt zu Punkt an eine benachbarte Knotenvorrichtung zu übertragende Nachricht in dem Fall, in dem die benachbarte Knotenvorrichtung Mittel zum Wiederzusammensetzen des ersten und des zweiten Fragments, um die Nachricht zu rekonstruieren, beinhaltet, fragmentiert wird und durch die Knotenvorrichtung nach Anspruch 5 auf einer Vielzahl von Frequenzbändern übertragen wird, und andernfalls durch die Knotenvorrichtung nach Anspruch 5 auf einem einzigen Frequenzband übertragen wird.

8. Ein Computerprogrammprodukt, **dadurch gekennzeichnet, dass** es Anweisungen zur Umsetzung, durch eine Knotenvorrichtung, des Verfahrens nach einem beliebigen der Ansprüche 1 bis 4 beinhaltet, wenn das Programm durch einen Prozessor der Knotenvorrichtung ausgeführt wird.

9. Ein Speicherungsmedium, **dadurch gekennzeichnet, dass** es ein Computerprogramm speichert, das Anweisungen zur Umsetzung, durch eine Knotenvorrichtung, des Verfahrens nach einem beliebigen der Ansprüche 1 bis 4 beinhaltet, wenn das Programm durch einen Prozessor der Knotenvorrichtung ausgeführt wird.

## Claims

1. A transmission method for transmitting a message from a first node device to a second node device belonging to a network neighbourhood of said first node device, said first and second node devices belonging to an electrical supply network using powerline communications, the transmission method being **characterised in that** it comprises the following steps implemented by the first node device:
- fragmenting (S210) said message into N fragments, N being a natural integer greater than or equal to 2;
- associating (S220), with the odd fragments, a first frequency band of a set of frequency bands comprising at least two frequency bands and associating, with the even fragments, a second frequency band of said set of frequency bands, said first and second frequency bands being different; and
- transmitting (S230) each of said first and second fragments on the frequency band with which it is associated.

2. The method according to claim 1, wherein said message is fragmented in accordance with the 6LowPAN protocol.

3. The method according to claim 1 or 2, which further comprises the following steps performed by said second node device:
- receiving each of said N fragments on the frequency band with which it is associated; and
- reassembling said N fragments to reconstruct said message.

4. The method according to any one of claims 1 to 3, wherein said set of frequency bands comprises:
- the CENELEC A frequency band;
- the CENELEC B frequency band; and
- the FCC frequency band or the ARIB frequency band.

5. A node device of an electrical supply network using powerline communications, said node device being configured to transmit a message to another node device of said network belonging to its network neighbourhood, said node device comprising:
- means for fragmenting said message into N fragments, N being a natural integer greater than or equal to 2;
- means for associating, with the odd fragments, a first frequency band of a set of frequency bands comprising at least two frequency bands and for associating, with the even fragments, a second frequency band of said set of frequency bands, said first and second frequency bands being different; and
- means for transmitting each of said first and second fragments on the frequency band with which it is associated.

6. An electrical supply network using powerline communications, said network comprising a plurality of node devices, said plurality of node devices comprising at least one node device according to claim 5 , and said other node device comprising:
- means for receiving each of said first and second fragments on the frequency band with which it is associated; and
- means for reassembling said first and second fragments to reconstruct said message.

7. The electrical supply network according to claim 6, wherein a message that is to be transmitted in broadcast mode to a plurality of adjacent node devices is transmitted by said node device according to claim 5 on a single frequency band and a message that is to be transmitted in unicast mode to an adjacent node device is fragmented and transmitted by said node device according to claim 5 on a plurality of frequency bands in the case where said adjacent node device comprises means for reassembling said first and second fragments to reconstruct said message and is transmitted by said node device according to claim 5 on a single frequency band otherwise.

8. A computer program product, **characterised in that** it comprises instructions for implementing, by a node device, the method according to any one of claims 1 to 4, when said program is executed by a processor of the node device.

9. A storage medium, **characterised in that** it stores a computer program comprising instructions for implementing, by a node device, the method according to any one of claims 1 to 4, when said program is executed by a processor of the node device.
